(19) **Europäisches Patentamt / European Patent Office / Office européen des brevets**

(11) **EP 4 458 580 A1**

(12) # EUROPEAN PATENT APPLICATION

(43) Date of publication:
**06.11.2024   Bulletin 2024/45**

(21) Application number: **23171058.3**

(22) Date of filing: **02.05.2023**

(51) International Patent Classification (IPC):
**B32B 29/00** (2006.01)   **B32B 7/12** (2006.01)
**B32B 21/02** (2006.01)   **B32B 21/04** (2006.01)
**B32B 21/06** (2006.01)   **B32B 7/08** (2019.01)

(52) Cooperative Patent Classification (CPC):
**B32B 29/005; B32B 7/08; B32B 7/12; B32B 21/02;**
**B32B 21/04; B32B 21/06; B32B 29/002;**
B32B 2307/72; B32B 2307/7242; B32B 2307/7376;
B32B 2419/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ahlstrom Oyj**
**00100 Helsinki (FI)**

(72) Inventors:
• **MOREAU, Benoit**
**59236 Frelinghien (FR)**
• **PAQUET, Olivier**
**38200 Jardin (FR)**

(74) Representative: **Hoffmann Eitle**
**Patent- und Rechtsanwälte PartmbB**
**Arabellastraße 30**
**81925 München (DE)**

(54) **CELLULOSE-BASED VOC BARRIER**

(57)     The present disclosure relates to a layered assembly comprising a VOC-impermeable cellulose-based layer, a method of insulating against VOCs using a VOC-impermeable cellulose-based layer, and a method of preparing a layered assembly comprising a VOC-impermeable cellulose-based layer.

EP 4 458 580 A1

**Description**

**Technical field**

The present disclosure relates to a layered assembly comprising a VOC-impermeable cellulose-based layer, a method of insulating against VOCs using a VOC-impermeable cellulose-based layer, and a method of preparing a layered assembly comprising a VOC-impermeable cellulose-based layer.

**Background art**

Indoor air pollution is a key contributor to health risks ranging from skin, eye, nose and throat irritations to organ damage and cancer. Chief among such pollutants are volatile organic compounds (VOC) which can be emitted from various indoor sources such as furniture, paints, and building materials. Emitted VOCs can come into contact with occupant's bodies by inhalation or absorption into mucous membranes.

Formaldehyde as a particular VOC is a colourless, flammable gas at room temperature with a strong odour, which can cause skin, eye, nose and throat irritation. Moreover, it is suspected to be a carcinogen. Formaldehyde emitters may include many products, such as plywood, resins of furniture and boards, building materials and insulation, glues, paints, lacquers, etc. VOCs have also been identified in relation to the so-called "sick building syndrome", which is an umbrella term of acute health and comfort effects experienced by occupants.

Efforts to reduce VOC concentrations in indoor spaces have so far focussed on preparing furniture and/or building materials with lower VOC emissions, off-gassing, improving ventilation in indoor spaces, and the addition of VOC scavengers such as primary and secondary amines, borax and sodium sulphites.

Typically, these methods only provide intermittent relief and/or they can require complicated and expensive processing steps. Additionally, the use of chemical scavengers and/or plastic coverings may not be environmentally friendly as the required materials are not biosourced.

**Summary of the invention**

The present invention solves the problems of the prior art by the following means.

In a first aspect, the present invention relates to a layered assembly comprising a base and a cellulose-based layer configured on said base; wherein the cellulose-based layer has a thickness of at least 20 $\mu$m, preferably at least 30 $\mu$m and more preferably at least 40 $\mu$m, and a density of at least 800 kg/m$^3$; wherein the cellulose-based layer covers at least one surface of the base; wherein the base contains at least one emitter of a volatile organic compound (VOC); and wherein the cellulose-based layer is substantially impermeable to the VOC.

In a second aspect, the present invention relates to a method of insulating against VOCs using a cellulose-based layer, wherein the cellulose-based layer has a thickness of at least 20 $\mu$m, preferably at least 30 $\mu$m and more preferably at least 40 $\mu$m, and a density of at least 800 kg/m$^3$, and wherein the cellulose-based layer is substantially impermeable to at least one VOC, preferably in a layered assembly.

In a third aspect, the present invention relates to a method for preparing the layered assembly according to the first aspect, wherein the method comprises configuring the cellulose-based layer on the base by any of pressing, laminating, gluing, immersing, stapling, nailing, bonding, coating.

**Brief description of the drawings**

Figure 1 depicts a bar chart showing the non-dissolved cellulosic content measurement for different types of parchmentized samples.

Figure 2 describes the experimental setup for measuring the formaldehyde transmission flux of Example 2.

      (1): Formaldehyde reservoir
      (2): Sample
      (3): Air inlet
      (4): Air outlet
      (5): Sealed container
      (6): Water trap

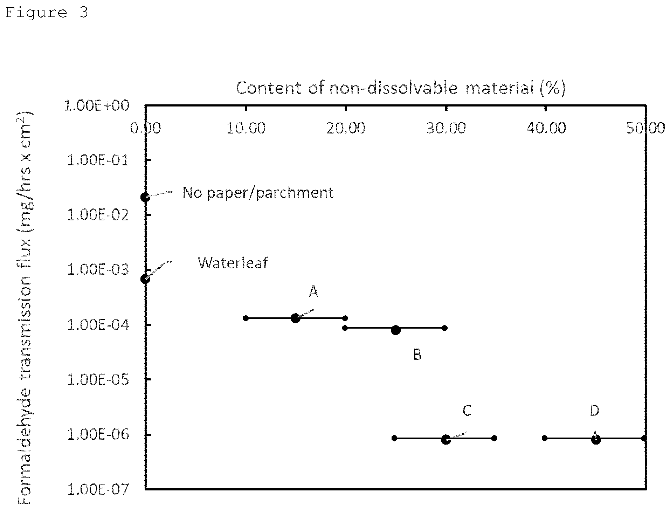

Figure 3 describes the results for the formaldehyde transmission flux as a function of content of non-dissolvable material.

(A) Parchment A - Low Parchmentization
(B) Parchment B - Medium Parchmentization
(C) Parchment C - Medium-to-high Parchmentization
(D) Parchment D - Very high Parchmentization

**Detailed description of the invention**

**Layered assembly**

In a first aspect, the present invention relates to a layered assembly comprising a base and a cellulose-based layer configured on said base; wherein the cellulose-based layer has a thickness of at least 20 $\mu$m, preferably at least 30 $\mu$m and more preferably at least 40 $\mu$m, and a density of at least 800 kg/m$^3$; wherein the cellulose-based layer covers at least one surface of the base; wherein the base contains at least one emitter of a volatile organic compound (VOC); and wherein the cellulose-based layer is substantially impermeable to the VOC.

The term "cellulose-based" describes a substrate and/or material and/or article comprised substantially of cellulose. The material may be a fibre or a film. Cellulose materials are derived from manmade sources such as regenerated cellulose fibres or films or from natural sources such as fibres or pulp from woody plants or non-woody plants. Cellulose-based materials may comprise woven or non-woven cellulose. Non-woven cellulose-based materials can be formed from many processes such as, for example, spin laying, carding, air laying and wet laying process. The basis weight of cellulose-based materials is usually expressed in weight per unit area, for example in grams per square meter (gsm = g/m$^2$) or ounces per square foot (osf). Cellulose-based materials may comprise native cellulosic fibres and/or non-dissolvable cellulosic material.

The term "fibre" as used herein refers to a material form characterized by an extremely high ratio of length to diameter. Generally, cellulose fibres have a very broad range of diameters and length based on fibre type and source of fibre. The average length of a wood pulp fibre as preferably used in the present invention is typically in the range of between from 0.3 mm to 3.5 mm, preferably from 0.3 mm to 3.0 mm, more preferably from 0.8 mm to 2.5 mm and even more preferably from 1.0 mm to 2.0 mm. The diameter of a wood pulp fibre is typically in the range of from 10 $\mu$m to 40 $\mu$m, preferably from 15 $\mu$m to 35 $\mu$m and more preferably from 20 $\mu$m to 30 $\mu$m. The aspect ratio (ratio of fibre length to fibre diameter) of a wood pulp fibre is therefore typically in the range of from 7.5 to 350, preferably from 7.5 to 300, more preferably from 10 to 200 and even more preferably from 20 to 150. The terms "fibre" and "filament" can be used interchangeably for the purposes of the present invention unless otherwise specifically indicated.

The term "native cellulosic fibres" refers to cellulose fibres from natural sources such as woody plants including deciduous and coniferous trees or non-woody plants including cotton, flax, esparto grass, kenaf, sisal, abaca, milkweed, straw, jute, hemp and bagasse. Preferably, the native cellulosic fibres are suitable for being dissolved by the gelatinizing agent. Suitable fibres for dissolution are, for example, hardwood fibres, softwood fibres or annual plant fibres. The native cellulosic fibres form a partially crystalline material comprising a crystallized fraction with the crystalline form of Cellulose I comprising all-parallel-oriented cellulose chains.

The term "non-dissolvable cellulosic material" specifies a material, which may be obtained by submitting the native cellulosic fibres to a reaction with a gelatinizing agent thereby at least partially dissolving the native cellulosic fibres, wherein the native cellulosic fibres are partially dissolved and the dissolved fraction forms a gel-like viscous material, and subsequently eliminating the gelatinizing agent by washing with a reprecipitation agent, whereby the gel-like material precipitates to form a solid material. Such non-dissolvable cellulosic material comprises non-fibrous cellulosic material forming a gel and some fibres trapped inside the gel that are not accessible to the gelatinizing agent. The material is designated as "non-dissolvable" if it does not dissolve in a 0.5 M cupri-ethylenediamine (CED) solution in water as laid out in Example 1. One process of dissolving native cellulosic fibres and reprecipitating them is referred to as the parchmentizing process. The solid material, which is referred to as the non-dissolvable cellulosic material herein may comprise other forms of crystallized fraction such as a crystallized fraction with the crystalline form of Cellulose II comprising anti-parallel cellulose chains. The non-dissolvable cellulosic material is preferably reprecipitated gelatinized cellulosic material and natural fibres that are trapped inside the gel.

The term "volatile organic compound" (VOC) as used herein, refers to an organic compound or a fraction of creosote with a high vapour pressure at room temperature. In one embodiment, a VOC may have a vapour pressure of 0.01 kPa or more at 293.15 K under the particular conditions of use. VOCs may be emitted from wood-based materials, resins, paints, lacquers, etc of which furniture or building materials may be comprised. Exposure to VOCs, e.g. by inhalation or via mucous membrane, may cause a number of health issues including nausea, eye, nose and throat irritations, lung and bronchial irritations, and dizziness.

The term "emitter of a VOC" as used herein, refers to an article or a material that is capable of releasing a VOC at room temperature and pressure. Said VOC may be referred to the "VOC of the emitter" or more simply "the VOC" unless otherwise indicated. The emitter of a VOC is herein also referred to simply as the "emitter" unless otherwise indicated. When the emitter is contained in the base, the emitter is capable of releasing VOCs from the base at room temperature and pressure.

The emitter may be capable of releasing more than one VOC at room temperature and pressure. For instance, in one embodiment the emitter may be capable of releasing VOCs A and B at room temperature and pressure. In one embodiment, the emitter is capable of emitting a plurality of VOCs at room temperature and pressure. Likewise, the base may contain more than one emitter of a VOC. When the base contains more than one emitter, the emitters do not have to be capable of emitting the same VOCs. For instance, a base may contain an Emitter 1 and an Emitter 2, wherein Emitter 1 is capable of releasing VOCs A and B at room temperature and pressure. Emitter 2 may be capable of releasing VOCs A and B at room temperature and pressure, or releasing VOCs B and C at room temperature and pressure, or releasing VOCs C and D at room temperature and pressure, or else.

In one embodiment, the emitter has a VOC emission above a detection threshold or a peak VOC emission. When the emitter is contained in a base, the base typically has a VOC emission above a detection threshold or a peak VOC emission.

The term "emission" as used herein refers to a quantity of a gas being emitted from a source within a specified amount of time. The term "VOC emission" as used herein, refers to an emission, wherein the gas is a VOC. When more than one VOC is emitted, the VOC emission may be the sum of individual VOC emissions. Unless specified otherwise, the emitted gas is herein a VOC. The emission may be characterised for a particular surface area of source, a particular mass of source, a particular volume of source, or else. If the emission is characterised for a particular surface area of a source, it is herein referred to as an "emission flux". Specifically, the term "emission flux" may be defined as [quantity of gas]/([surface area] x [time]), wherein [surface area] is the surface area of the source. If the emission is characterised for a particular mass of source, it may be expressed as [quantity of gas]/([mass] x [time]), wherein [mass] is the mass of the source. If the emission is characterised for a particular volume of source, it may be expressed as [quantity of gas]/([volume] x [time]), wherein [volume] is the volume of the source. Herein, typically the base is the source due to the emitters contained therein. That is when the base has a surface area of (SA) $cm^2$, an emission of (e) mg of gas (g) within a timespan of (t) hrs, then the (g) emission flux as characterised for a particular surface area of the base is given by (e)/[(t) hrs x (SA) $cm^2$]. Similarly, when the base has a mass of (m) kg, then the (g) emission as characterised for a particular mass, is given by (e)/[(t) hrs x (m) kg]. Similarly, when the base has a volume of (v), then the (g) emission as characterised for a particular mass, is given by (e)/[(t) hrs x (v) $cm^3$].

The emitter typically has a VOC emission above a detection threshold. When the emitter is contained in a base, the base typically has a VOC emission above a detection threshold.

However, it is known that VOC emissions from an emitter may decrease over time as VOCs or VOC-generating species are depleted from an emitter. For instance, wood-based materials may initially have high VOC emissions following major processing steps such as cutting of trees, cutting boards, hot-pressing, gluing, etc. With time, the volume of such emissions typically decreases at which point it may fall under a detection limit. Such wood-based materials are capable of releasing VOCs at room temperature and pressure. Due to such a change over time, the emitter may also be characterised by its peak VOC emission recorded closely after major processing steps of the base. Accordingly, the emitter may have a peak VOC emission. When the emitter is contained in a base, the base typically has a peak VOC emission. The term "peak VOC emission" may also be referred to as the "early lifetime VOC emission". In one embodiment, the peak emission may be measured within 5 years after a major processing step, within 4 years after a major processing step, within 3 years after a major processing step, within 2 years after a major processing step, within 1 year after a major processing step, within 6 months after a major processing step, within 3 months after a major processing step, within 1 month after a major processing step, or within 1 week after a major processing step.

In a preferred embodiment, the emitter has a spontaneous VOC emission above a detection threshold or a spontaneous peak VOC emission. When the emitter is contained in a base, the base typically has a spontaneous VOC emission above a detection threshold or a spontaneous peak VOC emission.

The VOC emission is "spontaneous" if emission occurs spontaneously under ambient conditions, i.e. without further energy input or manipulation. "Further energy input or manipulation" may include operations that are destructive to the base and would thereby increase its VOC emission, such as burning, shredding, drilling, beating, sawing, etc. Ambient conditions may be the room temperature, pressure, humidity, etc which can be expected within conventional climatic and domestic surroundings. For instance, in one embodiment, ambient conditions may include a temperature range of 10°C to 35°C, preferably 18 to 23 °C at atmospheric pressure. Ambient conditions may also include local temperature and humidity fluctuations that can be expected within conventional climatic and domestic surroundings. Such variations may include localised heating due to sunlight exposure and sudden humidity changes, e.g. brought about by condensation.

In a preferred embodiment, the emitter has a spontaneous VOC emission or a spontaneous peak VOC emission of at least 0.5 $\mu$g/m$^3$. Similarly, the base may have a spontaneous VOC emission or a spontaneous peak VOC emission of at least 1.0 $\mu$g/m$^3$. Preferably, the spontaneous VOC emission and/or spontaneous peak VOC emission of the emitter and/or the base is at least 5.0 pg/m3, more preferably at least 10.0 pg/m3, more preferably at least 30.0 pg/m3, more preferably at least 50.0 pg/m3, more preferably at least 100.0 pg/m3, more preferably at least 500.0 pg/m3, more preferably at least 1000.0 pg/m3, and more preferably at least 2000.0 $\mu$g/m$^3$.

In a preferred embodiment, the VOC is formaldehyde and the spontaneous formaldehyde emission and/or spontaneous peak formaldehyde emission of the emitter and/or the base is at least 0.5 $\mu$g/m$^3$ as determined according to the EN 717-7 standard. Preferably, the spontaneous formaldehyde emission and/or spontaneous peak formaldehyde emission of the emitter and/or the base is at least 1.0 pg/m3, more preferably at least 5.0 pg/m3, more preferably at least 10.0 pg/m3, more preferably at least 30.0 pg/m3, more preferably at least 50.0 pg/m3, more preferably at least 100.0 pg/m3, more preferably at least 500.0 pg/m3, more preferably at least 1000.0 pg/m3, and even more preferably at least 2000.0 $\mu$g/m$^3$.

The cellulose-based layer that is substantially impermeable to the VOC may herein also be referred to as the "VOC-impermeable cellulose-based layer" or simply the "cellulose-based layer" unless otherwise indicated.

The cellulose-based layer has a thickness of at least 20 $\mu$m. Preferably, the cellulose-based layer has a thickness of at least 30 $\mu$m, more preferably at least 40 $\mu$m, more preferably at least 50 $\mu$m, more preferably at least 60 $\mu$m, more preferably at least 70 $\mu$m, more preferably at least 80 $\mu$m, more preferably at least 90 $\mu$m, more preferably at least 100 $\mu$m, more preferably at least 110 $\mu$m, more preferably at least 120 $\mu$m, more preferably at least 130 $\mu$m, more preferably at least 140 $\mu$m, more preferably at least 150 $\mu$m, more preferably at least 160 $\mu$m, more preferably at least 170 $\mu$m, more preferably at least 180 $\mu$m, more preferably at least 190 pm, and even more preferably at least 200 $\mu$m.

In one embodiment, the cellulose-based layer has a thickness of at most 1.00 mm, preferably at most 0.8 mm, more preferably at most 0.6 mm, more preferably at most 0.5 mm, more preferably at most 0.4 mm, more preferably at most 0.35 mm, more preferably at most 0.3 mm, and even more preferably at most 0.25 mm.

The cellulose-based layer has a density of at least 800 kg/m$^3$. Preferably, the cellulose-based layer has a density of at least 850 kg/m$^3$, more preferably at least 900 kg/m$^3$, more preferably at least 950 kg/m$^3$, more preferably at least 1000 kg/m$^3$. The density may be determined by ISO 534.

The cellulose-based layer is substantially impermeable to the VOC of the emitter. When the emitter is capable of emitting more than one VOC at room temperature and pressure, the cellulose-based layer is substantially impermeable to at least one VOC of the emitter. In one embodiment, the cellulose-based layer is substantially impermeable to substantially all VOCs of the emitter. The term "impermeability" as used herein, is defined as the quality of a material or an article only to let a small fraction of molecules permeate through said material or article. The term may also be understood as the quality of a material or an article to substantially reduce VOC transmission through said material or article.

The cellulose-based layer covers at least one surface of the base. The at least one surface of the base that is covered is herein referred to as the "covered surface". The surface of the layered assembly is the interface between the layered assembly and the surroundings. At the covered surface, the surface of the layered assembly cannot be the surface of the base, because the cellulose-based layer is interposed between the covered surface and the surroundings. By being impermeable to the VOC and covering the at least one surface of the base, the cellulose-based layer insulates the surroundings from said VOC at the covered surface. The term "insulating from a VOC" or "insulating against a VOC" as referred to herein, refers to the ability of a material or an article to substantially reduce VOC transmission through said material, thereby leading to a net reduction in VOC concentration in a volume compared to a situation where the material or article is not present.

In an exemplary embodiment, the layered assembly is a furniture article such as a wardrobe, comprising a wood-based frame as a base which is covered by a VOC-impermeable cellulose-based layer. Wood-based materials contained in the frame emit a VOC from the frame but said VOC cannot permeate the cellulose-based layer. The surroundings include the domestic spaces in the vicinity of the wardrobe, e.g. the room in which the wardrobe is placed. The cellulose-based layer thus insulates the room against the VOC emissions, meaning that the VOC concentration in the room would be higher if the cellulose-based layer did not cover the base.

In one embodiment, the cellulose-based layer has a basis weight of at least 30 gsm, preferably at least 40 gsm, more preferably at least 45 gsm, more preferably at least 50 gsm, more preferably at least 55 gsm, more preferably at least 60 gsm, and even more preferably at least 65 gsm. The basis weight may be measured according to ISO 536.

In one embodiment, the cellulose-based layer comprises tracing paper or a high-density paper. In one embodiment, the cellulose-based layer consists of tracing paper or a high-density paper.

In a preferred embodiment of the first aspect of the present invention, the cellulose-based layer comprises a continuous cellulosic fibre matrix that comprises native cellulosic fibres and non-dissolvable cellulosic material.

The term "continuous cellulosic fibre matrix" as used herein, refers to a cellulose material comprising native cellulosic fibres and non-dissolvable cellulosic material, wherein the native cellulosic fibres are embedded in the non-dissolvable cellulosic material, whereby pores of the fibrous skeleton are blocked. The continuous cellulosic fibre matrix thus represents a dense material providing a cellulose continuum between the native cellulose fibres and the non-

dissolvable cellulosic material reducing voids at the interface between the native cellulose fibres and the non-dissolvable cellulosic material. Therefore, the continuous cellulosic fibre matrix is a continuous material with reduced porosity. Preferably, the continuous cellulosic fibre matrix is non-porous. The continuous cellulosic fibre matrix may have high gas barrier properties, especially towards VOCs. In a preferred embodiment, the continuous cellulosic fibre matrix is substantially impermeable to at least one VOC. Without wishing to be bound by theory, the present inventors believe that a cellulose-based layer comprising a continuous cellulosic fibre matrix along with the thickness and density requirements has substantially high barrier properties to VOCs such as formaldehyde, because VOC molecules cannot permeate the densified continuous cellulosic fibre matrix with reduced porosity.

In one embodiment, the continuous cellulosic fibre matrix further comprises de-structured cellulosic fibres. The expression "de-structured cellulosic fibres" describes the periphery of a native cellulosic fibre that has been partially dissolved with a gelatinizing agent, whereby a progressive structure change from native cellulose to precipitated cellulose is generated. Such a progressive structure change means that the structure of the continuous cellulosic fibre matrix contains a structural gradient, wherein the crystalline structure of the native cellulosic fibre slowly changes into the mostly amorphous structure of the non-dissolvable cellulosic material by formation of de-structured cellulosic fibres on the surface of the native cellulosic fibres. The de-structured cellulosic fibres thus surround the native cellulosic fibres and are interposed between the native cellulosic fibres and the non-dissolvable cellulosic material. Preferably, the continuous cellulosic fibre matrix may consist of native cellulosic fibres, de-structured cellulosic fibres and non-dissolvable cellulosic material.

In one embodiment, the cellulose-based layer comprises at least 50 wt% continuous cellulosic fibre matrix. Preferably, the cellulose-based layer comprises at least 55 wt% continuous cellulosic fibre matrix, more preferably at least 60 wt% continuous cellulosic fibre matrix, more preferably at least 65 wt% continuous cellulosic fibre matrix, more preferably at least 70 wt% continuous cellulosic fibre matrix, more preferably at least 75 wt% continuous cellulosic fibre matrix, more preferably at least 80 wt% continuous cellulosic fibre matrix, more preferably at least 85 wt% continuous cellulosic fibre matrix, more preferably at least 90 wt% continuous cellulosic fibre matrix, more preferably at least 95 wt% continuous cellulosic fibre matrix, and even more preferably at least 99 wt% continuous cellulosic fibre matrix. In one embodiment, the cellulose-based layer substantially consists of the continuous cellulosic fibre matrix. In one embodiment, the cellulose-based layer consists of the continuous cellulosic fibre matrix.

In a preferred embodiment of the first aspect of the present application, the content of the non-dissolvable cellulosic material in the continuous cellulosic fibre matrix is from 10 to 60 wt%. The content of the non-dissolvable cellulosic material is measured as described in Example 1. In one embodiment, the content of the non-dissolvable cellulosic material in the continuous cellulosic fibre matrix is from 12 to 58 wt%, more preferably from 14 to 56 wt%, more preferably from 16 to 54 wt%, more preferably from 18 to 52 wt%, more preferably from 20 to 50 wt%, more preferably from 22 to 50 wt%, and even more preferably from 24 to 50 wt%. Without wishing to be bound by theory, the present inventors believe that a cellulose-based layer comprising a continuous cellulosic fibre matrix with a non-dissolvable cellulosic material content of 10-60 wt% along with the thickness and density requirements has especially high barrier properties to VOCs such as formaldehyde, because VOC molecules cannot permeate the densified continuous cellulosic fibre matrix with reduced porosity. Below 10% of non-dissolvable cellulosic material in the continuous cellulosic fibre matrix, the continuous cellulosic fibre matrix may be too porous and/or insufficiently densified, thereby not achieving especially high barrier properties. Above 60% of non-dissolvable cellulosic material in the continuous cellulosic fibre matrix, the continuous cellulosic fibre matrix may be brittle leading to cracks in the continuous cellulosic fibre matrix.

In a preferred embodiment of the first aspect of the present invention, the cellulose-based layer has a VOC transmission flux of at most 1.5E-04 mg/(cm$^2$·hrs). Preferably, the cellulose-based layer has a VOC transmission flux of at most 1.5E-05 mg/(cm$^2$·hrs), and more preferably the cellulose-based layer has a VOC transmission flux of at most 1.5E-06 mg/ (cm$^2$·hrs).

The term "transmission" as used herein, refers to a quantity of a gas being transmitted through a membrane within a specified amount of time. A "membrane" as used herein may be an article made of a certain material through which a gas may be transmitted. The term "VOC transmission" as used herein, refers to a transmission, wherein the gas is a VOC. When more than one VOC is transmitted, the VOC transmission may be the sum of individual VOC transmissions. Unless specified otherwise, the transmitted gas is herein a VOC. The transmission may be characterised for a particular surface area of a membrane. If the transmission is characterised for a particular surface area of a membrane, it is herein referred to as a "transmission flux". Specifically, the transmission flux can be defined as [quantity of gas]/([surface area] x [time]), wherein the surface area refers to the surface area of the membrane through which transmission occurs. Herein, a transmission flux is typically specified for a specific gas, and a specific material and thickness of a membrane. In other words, a VOC transmission flux of (tf) cm$^3$/[cm$^2$ × day] for material (mat) with a thickness of (th), means that (tf) cm$^3$ of VOC transmits through a membrane of material (mat) and thickness (th) per cm$^2$ of the surface area of the membrane, per day.

The VOC transmission flux as used herein, may be used to characterise the VOC barrier properties of a material. For instance, when the material is the cellulose-based layer, the VOC transmission flux of the cellulose-based layer can characterise the VOC barrier properties of the cellulose-based layer. In other words, if the VOC transmission flux for material (mat) for a given thickness is high, large quantities of VOC pass through a membrane of said material and the material has a low VOC barrier property. Likewise, if the VOC transmission flux is low, the formaldehyde barrier property is high.

The VOC transmission flux may be measured as described in Example 2.

In a preferred embodiment, the VOC is formaldehyde and the VOC transmission flux is a formaldehyde transmission flux.

In a preferred embodiment of the first aspect of the present invention, the layered assembly has a VOC transmission reduction (X) of at least 50 %, when calculated according to the formula (1):

$$(X) = 100 \times (1 - \frac{(Y)}{(Y_0)}) \hspace{2cm} (1)$$

wherein Y is the reduced VOC transmission and $Y_0$ is the VOC emission. Preferably, the VOC transmission reduction is at least 60%, more preferably at least 65%, more preferably at least 70%, more preferably at least 75%, more preferably at least 80%, more preferably at least 85%, more preferably at least 90%, more preferably at least 95%, and even more preferably at least 98%.

The "reduced VOC transmission" (Y) is a VOC transmission for a specified time through a membrane comprising the cellulose-based layer. The "VOC emission" $Y_0$ is a VOC emission from a source during an amount of time. The "reduced VOC transmission" and the "VOC emission" may be measured as described in Example 3. Both the VOC emission and the reduced VOC transmission may be measured according to the appropriate part of the EN ISO 16000 series. The VOC emission and the reduced VOC transmission may also be cited as an emission/transmission flux. The "VOC transmission reduction" can characterise the reduction in VOC emission from a layered assembly relative to the base on its own without the covering cellulose-layer. It can thereby also characterise the level of insulation against a VOC provided by the cellulose-based layer in an assembly.

In a preferred embodiment of the first aspect of the present invention, the VOC is any of formaldehyde, acetaldehyde, benzaldehyde, valeraldehyde, 3-carene, nonanal, pinene, terpene, hexanal, butanal, acetone, and/or dichloromethane. In a preferred embodiment, the VOC is formaldehyde. In one embodiment, the VOC may comprise a combination of any of formaldehyde, acetaldehyde, benzaldehyde, valeraldehyde, 3-carene, nonanal, pinene, terpene, hexanal, butanal, acetone, and/or dichloromethane.

In a preferred embodiment of the first aspect of the present invention, the base comprises a natural fibre-based material and/or a wood-based material and/or a resin-impregnated material.

The term "natural fibre-based material" describes a material comprising substantially natural fibres. Such natural fibres may include but are not limited to wood fibres, hemp, straw, cellulose, wool, cotton, and flax. The "wood-based material" describes a material comprising substantially natural or processed wood. The term "resin-impregnated material" describes a material that comprises a resin impregnation, such as a phenol-formaldehyde resin, ureaformaldehyde resin, melamine-resin or an epoxy-resin. Natural fibre-materials, wood-based materials and epoxy-resin materials may be emitters of VOCs.

In a preferred embodiment of the first aspect of the present invention, the base is a building structure. The term "building structure" as used herein, may designate an article and/or a material that is commonly used in building and/or furniture applications. For instance, in one embodiment, the building structure may be a panel, board, a frame, a roll, a plank, or a support. Examples of panels may include a thermal insulation panel or a ceiling panel. Examples of boards may include a plasterboard, a solid wood board, a particle board, a chipboard, a medium-density fibreboard (MDF), a high-density fibreboard (HDF), an oriented strand board (OSB), a plywood board, or a wood plastic composite (WPC) board. In one embodiment, the layered assembly is a building structure.

In a preferred embodiment of the first aspect of the present invention, at the covered surface, the cellulose-based layer is in contact with the base. The term "in contact with the base" as used herein, means that the cellulose-based layer contacts the base without a further layer of another material interposed between the base and the cellulose-based layer.

## Method of insulating against VOCs

In a second aspect, the present invention relates to a method of insulating against VOCs using a cellulose-based layer, wherein the cellulose-based layer has a thickness of at least 20 $\mu$m, preferably at least 30 $\mu$m and more preferably at least 40 $\mu$m, and a density of at least 800 kg/m$^3$, and wherein the cellulose-based layer is substantially impermeable to at least one VOC, preferably in a layered assembly.

The cellulose-based layer of the second aspect may be characterised according to any of the embodiments according the first aspect. The cellulose-based layer of the second aspect of the present invention may be prepared according to the method of preparing the cellulose-based layer in the third aspect of the present invention, and its preparation may be further characterised in any way as laid out herein bellow.

The term "insulating against VOCs" is to be understood as in the first aspect. Insulating a domestic space such as a room and the occupants of said space against VOCs may take different forms. In one embodiment, the source of VOCs is clearly identifiable and VOC emissions may be mitigated by covering said source with the VOC-impermeable cellulose-based layer, preferably in a layered assembly according to the first aspect. In a different embodiment, the source of VOCs may be not clearly identifiable and/or remote but nevertheless a VOC-impermeable cellulose-based layer may be used to insulate the domestic space against VOCs. The present disclosure therefore also relates to the use of a VOC-impermeable cellulose-based layer to insulate against at least one VOC.

For instance, in one embodiment the VOC-source is in a space A such as a room, which is adjoined to a space B such as a neighbouring room. A VOC-impermeable cellulose-based layer in the wall separating the spaces A and B may thus insulate the space B from VOC emissions of the source in space A. In other words, the VOC concentration in the space B may be lowered compared to a situation where the VOC-impermeable cellulose-based layer is not present, because VOC transmission through the cellulose-layer is substantially reduced. In another exemplary embodiment, the VOC-source may not be identifiable at all, but VOC concentrations in a space may be lowered using a VOC-impermeable cellulose-based layer.

The relative decrease in VOC concentration due to the presence of the cellulose-based layer compared to a situation where the cellulose-based layer is not present may be characterised as a "level of insulation". A level of insulation provided by the VOC-impermeable cellulose-based layer of at least (LoI)% against a gas (g) for a space A, means that the concentration of gas (g) in space A is at least (LoI)% reduced compared to a situation where the cellulose-based layer is not present.

In the layered assembly of the first aspect, the level of insulation is preferably characterised as the VOC transmission reduction (X).

In one embodiment, the level of insulation provided by the cellulose-based layer is at least 50%, preferably at least 55%, more preferably at least 65%, more preferably at least 70%, more preferably at least75%, more preferably at least 80%, more preferably at least 85%, more preferably at least 90%, more preferably at least 95%, and even more preferably at least 99%.

In a preferred embodiment, the VOC is formaldehyde and the cellulose-based layer is used to insulate against formaldehyde.

**Method of preparing a layered assembly**

In a third aspect, the present invention relates to a method of preparing a layered assembly according to the first aspect of the present invention.

In a preferred embodiment of the third aspect of the present invention, the method comprises configuring the cellulose-based layer on the base by any of pressing, laminating, gluing, immersing, stapling, nailing, bonding, coating.

In one embodiment, the cellulose-based layer is pressed, laminated, glued, stapled, nailed or bonded to the base, thereby covering at least one surface of the base.

In a preferred embodiment of the third aspect of the present invention, the method comprises preparing the cellulose-based layer by a method comprising

(i) the step of providing a cellulose fibre layer precursor comprising native cellulosic fibres,
(ii) subjecting the cellulose fibre layer precursor to a cellulose dissolution step to produce a treated cellulose fibre layer comprising dissolved cellulose, and (iii) subjecting the treated cellulose fibre layer to a reprecipitation step in which the dissolved cellulose is reprecipitated.

A number of preferable embodiments of this embodiment will hereinafter be discussed and therein reference to this embodiment will be made as the "foregoing preferred embodiment of the third aspect". Most preferably, the cellulose-based layer is prepared by a method comprising the steps (i)-(iii) before it is configured on the base.

In step (i) of the foregoing preferred embodiment of the third aspect, a cellulose fibre layer precursor comprising native cellulosic fibres is provided. For ease of reference, the terms "precursor material" and "cellulose fibre layer precursor" are used synonymously herein. The precursor material may comprise at least 50% native cellulosic fibres, preferably at least 55% native cellulosic fibres, more preferably at least 60% native cellulosic fibres, more preferably at least 65% native cellulosic fibres, more preferably at least 70% native cellulosic fibres, more preferably at least 75% native cellulosic fibres, more preferably at least 80% native cellulosic fibres, more preferably at least 85% native cellulosic fibres, more preferably at least 90% native cellulosic fibres, and even more preferably at least 95% native cellulosic fibres. In one embodiment, the precursor material substantially or fully consists of native cellulosic fibres. Preferably, the precursor material comprises less than 1 wt% non-dissolvable cellulosic material. In one embodiment, the precursor material comprises 80 wt% or more wood pulp.

In one embodiment, the precursor material may be any of cardboard, waterleaf, absorbent paper, filter paper, and/or cellulosic tissue.

In step (ii) of the foregoing preferred embodiment of the third aspect the cellulose fibre layer precursor is subjected to a cellulose dissolution step to produce a treated cellulose fibre layer comprising dissolved cellulose. In step (iii) of the foregoing preferred embodiment of the third aspect, the treated cellulose fibre layer is subjected to a reprecipitation step in which the dissolved cellulose is reprecipitated. As stated above, preparation of the cellulose-based layer is most preferably carried out prior to configuring it on the base. In one alternative embodiment however, the cellulose fibre layer precursor can be configured on the base, thereby covering at least one surface of the base, when it is subjected to the cellulose dissolution step. If the preparation of the cellulose-based layer takes place on the base, step (iii) of the foregoing embodiment is still carried out such that the treated cellulose fibre layer comprising dissolved cellulose is subjected to a reprecipitation step in which the dissolved cellulose is reprecipitated.

In a preferred embodiment of the foregoing preferred embodiment of the third aspect, the cellulose dissolution step comprises contacting the cellulose fibre layer precursor with a gelatinizing agent, thereby submitting the cellulose fibre layer precursor to a reaction with the gelatinizing agent to dissolve native cellulosic fibre to produce a treated cellulose fibre layer, and wherein the reprecipitation step comprises submitting the treated cellulose fibre layer to a reprecipitation agent.

In one embodiment, the cellulose dissolution step comprises at least partially infiltrating the cellulose fibre layer precursor with a gelatinizing agent, thereby submitting the cellulose fibre layer precursor to a reaction with the gelatinizing agent to dissolve native cellulosic fibres to produce a treated cellulose fibre layer.

"Partially infiltrated" herein means that only part of the native cellulosic fibres in the precursor material are contacted with the gelatinizing agent, the contacting being carried out by means of infiltration. In one embodiment, 10-99% by mass of the native cellulosic fibres in the precursor material are contacted with the gelatinizing agent, more preferably 20-99%, more preferably 30-99%, more preferably 40-99%, more preferably 50-99%, more preferably 60-99%, more preferably 70-99%, more preferably 80-99%, more preferably 90-99%. In another embodiment, substantially all of the native cellulose fibres in the precursor materials are contacted with the gelatinizing agent.

In one embodiment, the gelatinizing agent is provided in liquid form, e.g. in a solution. Said gelatinizing agent comprises at least one cellulose solvent selected from the group consisting of inorganic acids comprising sulfuric acid and phosphoric acid, Lewis acids comprising $ZnCl_2$ and $Ca(SCN)_2$, inorganic bases comprising NaOH, organic bases comprising N-methylmorpholine N-oxide, and ionic liquids comprising tetraalkylammonium salts. Preferably the gelatinizing agent comprises sulfuric acid.

In one embodiment, the precursor material is porous and capable of absorbing the gelatinizing agent, thereby leading to infiltration when the precursor material is contacted with the gelatinizing agent. The degree of infiltration may be controlled by means of controlling the porosity of the precursor material, controlling the basis weight of the precursor material, controlling the pressure of contacting gelatinizing agent (e.g. by impression with a roller), controlling the contacting time between the precursor material and the gelatinizing agent (e.g. by dipping the precursor material into the gelatinizing agent for a predetermined time), the addition of an eliminating reprecipitation agent, etc.

Following the at least partial infiltration with the gelatinizing agent, the precursor material is submitted to a reaction with the gelatinizing agent to dissolve native cellulosic fibres, to give a treated cellulose fibre layer. The reaction may be a chemical reaction. The degree to which the gelatinizing agent dissolves the native cellulosic fibres depends on the degree of infiltration, because the gelatinizing agent dissolves fibres that it directly contacts. Furthermore, the degree to which the reaction occurs depends on the nature and the concentration of the gelatinizing agent. For instance, if 10 wt% of the precursor material is infiltrated with the gelatinizing agent, the gelatinizing agent may dissolve 10 wt% or less of the native cellulosic fibres in the precursor material. In one embodiment, the gelatinizing agent reacts with substantially all of the native cellulosic fibre material it directly contacts, thereby dissolving all native cellulosic fibre material it directly contacts. The reaction with the gelatinizing agent and thus the dissolution of native cellulosic fibres yields a treated cellulose fibre layer. Said treated cellulose fibre layer thus comprises native cellulosic fibres and dissolved cellulosic fibres, the dissolved cellulosic fibres being a gel-like viscous material. Preferably, the treated cellulose fibre layer also comprises de-structured cellulosic fibres.

In a preferred embodiment of the foregoing preferred embodiment of the third aspect, the reprecipitation step comprises submitting the treated cellulose-based substrate precursor material to a reprecipitation agent. In one embodiment, all dissolved cellulosic fibres are submitted to the reprecipitation agent. In another embodiment, only part of the dissolved cellulosic fibres is submitted to the reprecipitation agent. Preferably at least the dissolved cellulosic fibres are submitted to the reprecipitation agent.

The reprecipitation agent interrupts the reaction between the gelatinizing agent and the native cellulosic fibres by eliminating the gelatinizing agent. Consequently, gel-like viscous material comprising dissolved cellulosic fibres precipitates into a solid material. This solid material may be non-fibrous cellulosic material and/or non-dissolvable cellulosic material. Said non-fibrous and/or non-dissolvable cellulosic material may be dry or wet. Preferably, the non-fibrous and/or non-dissolvable cellulosic material forms together with de-structured cellulosic fibre the continuous cellulosic fibre matrix.

In one embodiment, the reprecipitation agent is water. In such an embodiment "eliminating the gelatinizing agent" means diluting and washing away of the gelatinizing agent. Other reprecipitation agents may be used which otherwise eliminate the gelatinizing agent, e.g. by neutralizing it or otherwise rendering it inactive.

In a preferred embodiment of the foregoing preferred embodiment of the third aspect, the method may comprise a further step (iv), wherein cellulose-based layer is further consolidated by a drying step. Optionally, the step (iv) may comprise a further separate washing step before the drying step. In one embodiment, the step (iv) is carried out on a substrate configured on the base, thereby covering at least one surface of the base, thereby consolidating the cellulose-based layer covering at least one surface of the base.

In a preferred embodiment of the third aspect of the present invention, the method comprises preparing the cellulose-based layer by a wet-laying process comprising refining steps and/or calendering, preferably supercalendering. For instance, in one embodiment the cellulose-based layer may be a tracing paper or a supercalendered paper prepared by supercalendering process.

Based on the foregoing discussion, the following examples, and without wishing to be bound by theory, the inventors have provided a VOC-impermeable cellulose-based layer which may be configured on a base in a layered assembly or by providing a method of using a VOC-impermeable cellulose-based layer to insulate against VOCs. The combination of the thickness, density and VOC-impermeability yield a material through which VOC molecules cannot permeate, thus insulating surroundings from VOC emissions. The inventors therefore believe that the problem of providing a fully biosourced, long-term VOC emission reduction has been solved.

## Examples

### Example 1 - Determination of amount of non-dissolvable cellulosic material

It is known that native cellulose assumes a Cellulose I structure. Upon gelatinization and reprecipitation, e.g. in the parchmentizing process, the cellulose may assume a Cellulose II structure with anti-parallel chain ordering. Cellulose II is more stable than Cellulose I and has a lower solubility. Dissolving a paper sample in a cupri-ethylenediamine (CED) solution and measuring the amount of undissolved material therefore gives an indication for the level of parchmentization in said paper sample.

5g of a paper sample are torn into ca 2 x 2 cm pieces and then placed in an electric grinder for 60s. The resultant pieces after grinding are 1-10 $mm^2$ in size. Next, the humidity content of the paper sample is measured by weight difference after drying for 30 minutes in an oven at 105 °C.

Tests are carried out in a temperature-controlled environment at 23°C +/- 1°C.

200 mg (+/- 2 mg) of the samples are weighed and placed in a 50 mL Duran bottle. The weight is corrected by the humidity measurement results from the sample to determine the dry sample weight which is used for all further characterisations. 3 10 mm glass beads are added to the Duran bottle and 20 mL of ultrapure water is added. 20 mL of CED (1 M, in water) is added and the air on top of the bottle is quickly purged with nitrogen before closing the cap. The sealed bottle is then wrapped in aluminium foil and placed on a shaker for 4 hrs at 200 rpm.

Following the 4 hrs, the filtrate is recovered on two pre-weighed glass filters (MGC Ahlstrom, and a MG 1502 prefilter placed atop the MGC) by vacuum filtration. The filtrate on the filters is then dried at 130 °C for 2 hrs and the filtrate weight is taken from the difference in the initial filter weight. The non-dissolved content is then taken as filtrate weight expressed as a percentage relative to the initial dry weight of the sample.

Table 1 | Amount of non-dissolvable cellulosic material for different levels of parchmentization.

| Material | Basis weight (g/m²) | Non-dissolvable cellulosic material |
|---|---|---|
| Waterleaf - No Parchmentization | 60 | 0% |
| Parchment A - Low Parchmentization | 60 | 10-20% |
| Parchment B - Medium parchmentization | 70 | 20-30% |
| Parchment C - Medium-to-high parchmentization | 70 | 25-35% |
| Parchment D - Very high parchmentization | 70 | 40-50% |

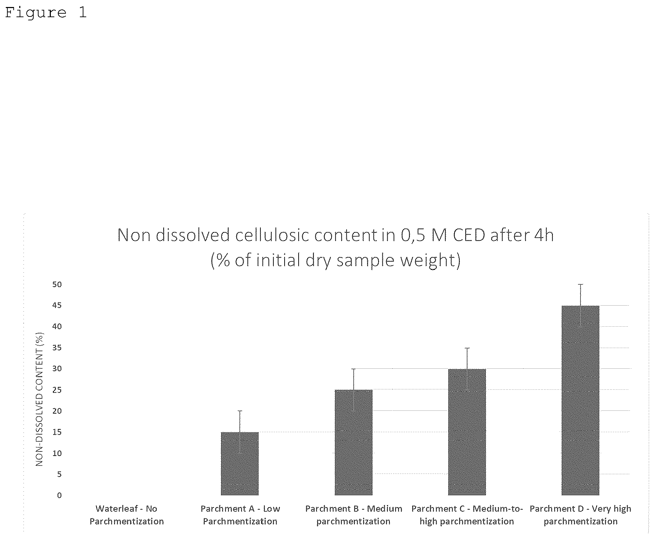

Figure 1 depicts a graphical representation of the data of Table 1.

**Example 2 - Determination of the formaldehyde transmission flux**

The formaldehyde transmission flux characterises the formaldehyde barrier properties of membrane of a certain surface area and thickness against formaldehyde. Herein, it is measured against a simulated emission source of a formaldehyde reservoir which is covered by the membrane. Formaldehyde molecules which cross the membrane are trapped in a water reservoir wherein they can be detected by UV/Vis-spectroscopy.

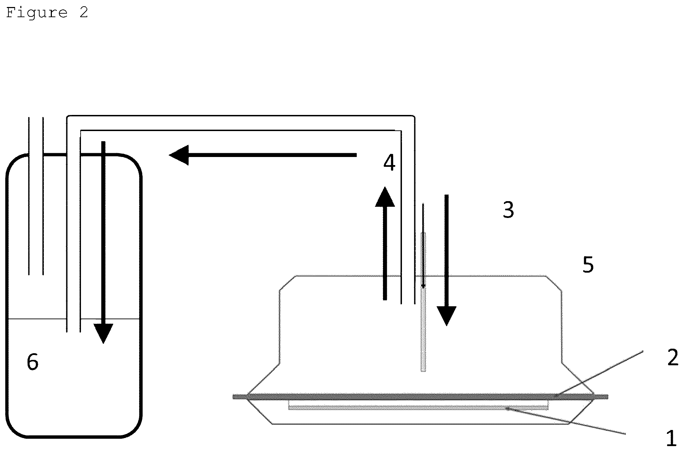

The experimental setup is described with reference to Figure 2. A formaldehyde reservoir (1) is covered by sample (2) membrane in a container (5). The container is sealed apart from an air inlet (3) and an air outlet (4). The air inlet (3) is disposed above the sample (2) and the air outlet (4) is connected to a water trap.

The experiment takes place at a temperature of 20 °C. The concentration of formaldehyde is set to either 15 or 1690 ppm in 15 mL of water. The water is placed underneath the sample to be tested in an otherwise sealed reservoir. An air flow of 10 cm$^3$/min is passed through the air inlet (3) and travels across the sample's top surface (2). The sample (2) membrane has a surface area of 78.54 cm$^2$ and a thickness of 80 to 90 $\mu$m for a 70 gsm sample. Thickness may vary for other basis weights. The basis weight of the papers is typically between 60 and 70 gsm in the examples introduced here, however the method may work for other basis weight ranges. Formaldehyde vapours from the reservoir (1) are moved by diffusion through the sample (2) due to the difference in concentration of Formaldehyde between the reservoir and the clean air coming from the inlet. These vapours are carried via the air outlet (4) into a water trap (6) which contains 200 mL of water. The airflow is kept running for 6 hrs and formaldehyde concentration is measured by UV/Vis-spectroscopy after reaction with Nash's reagent. The absorbance was measured at 412 nm and compared with a calibration curve.

The formaldehyde concentration in the water trap is converted into the formaldehyde transmission flux taking into account the surface area of the membrane and the time elapsed.

Table 2 | Formaldehyde transmission flux for different materials with different content of non-dissolvable cellulosic material

| Sample | Formaldehyde concentration in water trap (mg/L) | Formaldehyde transmission flux (mg/hrs x cm$^2$) | Non-dissolvable cellulosic material (%) |
|---|---|---|---|
| No paper/ parchment | 50 | 2.12E-02 | 0 |
| Waterleaf - No parchmentization | 1.59 | 6.75E-04 | 0 |
| Parchment A Low parchmentization | 0.31 | 1.32E-04 | 10-20 |
| Parchment B Medium parchmentization | 0.19 | 8.06E-05 | 20-30 |
| Parchment C Medium-to-high parchmentization | <0.019 | <8.06E-07 | 25-35 |
| Parchment D Very high parchmentization | <0.019 | <8.06E-07 | 40-50 |
| Tracing paper | 0.15 | 6.37E-05 | 0 |
| High density paper | 0.06 | 2.55E-05 | 0 |

The results of Table 2 are presented graphically in Figure 2 and clearly indicate that the VOC transmission flux strongly decreases as the content of non-dissolvable material increases, i.e. as the degree of parchmentization increases. The results in Table 2 also show that other types of paper having a dense structure such as tracing paper or a high-density paper will act as a formaldehyde barrier in comparison to an open paper such as a waterleaf.

**Example 3 - Determination of the VOC transmission reduction**

The VOC transmission reduction characterises the percentage reduction in formaldehyde emission from a base due to the presence of the VOC-impermeable cellulose-layer.

Different papers were placed on top of a wood-based panel (WBP) used as a VOC and formaldehyde source. Three parchmentized samples with different basis weights and levels of parchmentization were used as well as a kraft paper sheet for comparison. Two Parchment B samples (medium parchmentization) were used with basis weights of 50 and 70 g/m$^2$ respectively. One Parchment D sample was used (very high parchmentization) with a basis weight of 70 g/m$^2$. For these tests, the papers and WBP samples were pre-cut to defined dimensions prior to testing. Each paper was placed on the top surface of a wood-based panel sample. Back and edges of the system (WBP + paper) were covered using a low emission adhesive.Dimensions of wood-based panel elements and of paper sheets were 0.42 m x 0.17 m. For the preparation of test specimen, the adhesive covers 1 cm of each side of the sulfurized paper sheets. Therefore, the emitting surface of the test specimen is about 0.06 m$^2$ (0.40 m x 0.15 m). The thickness of the wood panel is 18 mm. Just after preparation, test specimens were placed on a stainless-steel stand. Sample preparation (EN ISO 16000-11) and Emission test (EN ISO 16000-9) was the same for all samples. Analyses of formaldehyde and other aldehydes (carbonyl compounds) were performed according to ISO 16000-3. The remaining VOCs were analysed according to ISO 16000-6. The VOC emission ($Y_0$) and the reduced formaldehyde transmission (Y) were determined according to EN ISO 16000-11, EN ISO 16000-9, ISO 16000-3, and ISO 16000-6 and a conditioning time of 14 days was set for all samples. The formaldehyde transmission reduction (X) was then calculated according to the formula (1)

$$(X) = 100 \times (1 - \frac{(Y)}{(Y_0)}) \qquad (1)$$

and the results are tabulated below in Table 3.

The results of Table 3 show that VOC transmission reductions of at least 65% can be readily achieved by providing a VOC-impermeable cellulose-based layer on a base. Formaldehyde transmission reductions of more than 98% can readily be achieved.

Table 3 | VOC transmission reduction for parchmentized materials

| VOC | WPB (Yo) ($\mu$g/m$^2$ x hr) | WPB + Kraft paper ($\mu$g/m$^2$ x hr) | (X) (%) | WPB + Parchment B, 50 g/m$^2$ ($\mu$g/m$^2$ x hr) | (X) (%) | WPB + Parchment B, 70 g/m$^2$ ($\mu$g/m$^2$ x hr) | (X) (%) | WPB + Parchment D, 70 g/m$^2$ ($\mu$g/m$^2$ x hr) | (X) (%) |
|---|---|---|---|---|---|---|---|---|---|
| Formaldehyde | 158 | 148.3 | 6.1 | 2.9 | 98.2 | 0.3 | 99.8 | 0.5 | 99.7 |
| Acetaldehyde | 8.3 | 6.8 | 18.1 | 0.9 | 89.2 | 1.2 | 85.5 | 0.7 | 91.6 |
| Benzaldehyde | 7.2 | 5.9 | 18.1 | <0.3 | >95.8 | <0.3 | >95.8 | <0.3 | >95.8 |
| Valeraldehyde | 7.1 | 6.3 | 11.3 | <0.3 | >95.8 | <0.3 | >95.8 | <0.3 | >95.8 |
| Hexaldehyde | 34.8 | 27.9 | 19.8 | 1.7 | 95.1 | 1.6 | 95.4 | 2.2 | 93.7 |
| $\alpha$-pinene | 10.5 | 12.9 | -22.9 | 3.3 | 68.6 | 1.5 | 85.7 | 3.4 | 67.6 |
| 3-Carene | 5.6 | 5.9 | -5.4 | <1.0 | >82.1 | <1.0 | >82.1 | <1.0 | >82.1 |
| Nonanal | 5.2 | 3.5 | 32.7 | <1.0 | >80.8 | <1.0 | >80.8 | <1.0 | >80.8 |
| **VOCT (=Total VOCs)** | **108.5** | **96.0** | **11.5** | **<5.0** | **>95.4** | **<5.0** | **>95.4** | **<5.0** | **>95.4** |

**Claims**

1.  A layered assembly comprising a base and a cellulose-based layer configured on said base;

    wherein the cellulose-based layer has a thickness of at least 20 $\mu$m, preferably at least 30 $\mu$m and more preferably at least 40 $\mu$m, and a density of at least 800 kg/m$^3$;
    wherein the cellulose-based layer covers at least one surface of the base;
    wherein the base contains at least one emitter of a volatile organic compound (VOC);
    and wherein the cellulose-based layer is substantially impermeable to the VOC.

2.  The layered assembly according to claim 1, wherein the cellulose-based layer comprises a continuous cellulosic fibre matrix that comprises native cellulosic fibres and non-dissolvable cellulosic material.

3.  The layered assembly according to any of the preceding claims, wherein the content of the non-dissolvable cellulosic material in the continuous cellulosic fibre matrix is from 10 to 60 wt%, more preferably from 15 to 55 wt%, when measured in accordance with the description.

4.  The layered assembly according to any of the preceding claims, wherein the cellulose-based layer has a VOC transmission flux of at most 1.5E-04 mg/(cm$^2$·hrs) when measured in accordance with the description.

5.  The layered assembly according to any of the preceding claims, wherein the layered assembly has a VOC transmission reduction (X) of at least 50%, preferably at least 65 %, when calculated according to the formula (1):

$$(X) = 100 \times (1 - \frac{(Y)}{(Y_0)}) \qquad (1)$$

    wherein Y is the reduced VOC transmission and $Y_0$ is the VOC emission, wherein Y and $Y_0$ are measured in accordance with the description.

6.  The layered assembly according to any of the preceding claims, wherein the VOC is any of formaldehyde, acetaldehyde, benzaldehyde, valeraldehyde, 3-carene, nonanal, pinene, terpene, hexanal, butanal, acetone, and/or dichloromethane, preferably formaldehyde.

7.  The layered assembly according to any of the preceding claims, wherein the base comprises a natural fibre-based material and/or a wood-based material and/or a resin-impregnated material.

8.  The layered assembly according to any of the preceding claims, wherein the base is a building structure; such as a laminated paper structure, an insulation panel, a ceiling panel, a fibre-based insulation material, a plasterboard, a solid wood board, a particle board, a chipboard, a medium-density fibreboard (MDF), a high-density fibreboard (HDF), an oriented strand board (OSB), a plywood board, or a wood plastic composite (WPC) board.

9.  The layered assembly according to any of the preceding claims, wherein, at the covered surface, the cellulose-based layer is in contact with the base.

10. A method of insulating against VOCs using a cellulose-based layer, wherein the cellulose-based layer has a thickness of at least 20 $\mu$m, preferably at least 30 $\mu$m and more preferably at least 40 $\mu$m, and a density of at least 800 kg/m$^3$, and wherein the cellulose-based layer is substantially impermeable to at least one VOC, preferably in a layered assembly.

11. A method for preparing the layered assembly according to any of claims 1-9, wherein the method comprises configuring the cellulose-based layer on the base by any of pressing, laminating, gluing, immersing, stapling, nailing, bonding, coating.

12. The method according to claim 11, wherein the method comprises preparing the cellulose-based layer by a method comprising

    (i) the step of providing a cellulose fibre layer precursor comprising native cellulosic fibres,

(ii) subjecting the cellulose fibre layer precursor to a cellulose dissolution step to produce a treated cellulose fibre layer comprising dissolved cellulose, and

(iii) subjecting the treated cellulose fibre layer to a reprecipitation step in which the dissolved cellulose is reprecipitated.

13. The method according to claim 14, wherein the cellulose dissolution step comprises contacting the cellulose fibre layer precursor with a gelatinizing agent, thereby submitting the cellulose fibre layer precursor to a reaction with the gelatinizing agent to dissolve native cellulosic fibres to produce a treated cellulose fibre layer, and

wherein the reprecipitation step comprises submitting the treated cellulose fibre layer to a reprecipitation agent.

14. The method according to claim 11, wherein the method comprises preparing the cellulose-based layer by a wet-laying process comprising refining steps and/or calendering, preferably supercalendering.

Figure 1

Non dissolved cellulosic content in 0,5 M CED after 4h
(% of initial dry sample weight)

Figure 2

Figure 3

Europäisches
Patentamt

European
Patent Office

Office européen
des brevets

## EUROPEAN SEARCH REPORT

**Application Number**

EP 23 17 1058

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 199901<br>Thomson Scientific, London, GB;<br>AN 1999-004003<br>XP002810247,<br>& JP H10 278187 A (DAINIPPON PRINTING CO LTD) 20 October 1998 (1998-10-20)<br>* abstract * | 1-14 | INV.<br>B32B29/00<br>B32B7/12<br>B32B21/02<br>B32B21/04<br>B32B21/06<br>B32B7/08 |
| A | DATABASE WPI<br>Week 200162<br>Thomson Scientific, London, GB;<br>AN 2001-552756<br>XP002810248,<br>& JP 2001 192995 A (TOPPAN PRINTING CO LTD) 17 July 2001 (2001-07-17)<br>* abstract * | 1-14 | |
| A | DATABASE WPI<br>Week 199938<br>Thomson Scientific, London, GB;<br>AN 1999-453241<br>XP002810249,<br>& JP H11 190000 A (DAINIPPON PRINTING CO LTD) 13 July 1999 (1999-07-13)<br>* abstract * | 1-14 | TECHNICAL FIELDS SEARCHED (IPC)<br><br>B32B |

The present search report has been drawn up for all claims

| Place of search | Date of completion of the search | Examiner |
|---|---|---|
| The Hague | 6 October 2023 | Aspeby, Erika |

EPO FORM 1503 03.82 (P04C01)

## ANNEX TO THE EUROPEAN SEARCH REPORT
## ON EUROPEAN PATENT APPLICATION NO.

**EP 23 17 1058**

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2023

| Patent document cited in search report | | Publication date | Patent family member(s) | | Publication date |
|---|---|---|---|---|---|
| JP H10278187 | A | 20-10-1998 | NONE | | |
| JP 2001192995 | A | 17-07-2001 | JP | 3951533 B2 | 01-08-2007 |
| | | | JP | 2001192995 A | 17-07-2001 |
| JP H11190000 | A | 13-07-1999 | NONE | | |

EPO FORM P0459

For more details about this annex : see Official Journal of the European Patent Office, No. 12/82